(19) **Europäisches Patentamt**

**European Patent Office**

**Office européen des brevets**

(11) **EP 1 087 495 A2**

(12) **EUROPEAN PATENT APPLICATION**

(43) Date of publication:
28.03.2001 Bulletin 2001/13

(51) Int. Cl.⁷: **H02J 7/00**

(21) Application number: **00307619.7**

(22) Date of filing: **04.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.09.1999 US 395042**

(71) Applicant:
**LUCENT TECHNOLOGIES INC.**
**Murray Hill, New Jersey 07974-0636 (US)**

(72) Inventors:
• **Gargiulo, Arnold R.**
**Dallas, Texas 75287 (US)**
• **Marawi, Bassam**
**Plano, Texas 75025 (US)**
• **Mweene, Loveday Haachitaba**
**Mesquite, Texas 75150 (US)**
• **Smith, Paul Douglas**
**Forney, Texas 75126 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(54) **Off line battery equalizer with initial trickle charging circuit**

(57) Apparatus for battery (64) equalization includes a power supply unit (61,62); an electrical parameter measuring unit (76), a switching unit (86), and a control unit (80). The power supply unit delivers an equalizing signal to the switching unit which is connected intermediate the power supply unit and the battery (64) to control delivery of the equalizing signal to the battery. The switching unit is configured to operate in a plurality of states. The switching unit delivers the equalizing signal to the battery at a first signal level when the switching unit is in a first state, and delivers the equalizing signal to the battery at a second signal level when the switching unit is in a second state. The electrical parameter measuring unit is connected to measure an electrical parameter associated with the battery. The control unit is connected with the electrical parameter measuring unit and with the switching unit. The control unit controls the state of the switching unit according to the value of the electrical parameter. A method for effecting battery equalization comprises the steps of connecting the battery with the apparatus with the switching unit configured to operate in the first state; the switching unit is arranged to present a high impedance path in the first state, and to present a low impedance path in the second state. The control unit is operated to change the state of the switching unit to the second state when the electrical parameter is at a predetermined value.

**FIG. 6**

**Description**

BACKGROUND OF THE INVENTION

The present invention is directed to battery equalizers, and especially to battery equalizers employed off line with respect to equipment served by the battery undergoing equalization. In many equipment configurations, and especially in telecommunications equipment configurations, direct current (DC) supply voltage is provided to equipment by DC system power supplies powered by alternating current (AC). In such configurations, battery supplies are often provided in parallel with the DC system power supplies in order to ensure that supply voltage is immediately available to the equipment in the event of a failure of the DC system power supplies. Such a failure would occur, for example, in the event of an AC power failure.

Batteries in a supply circuit for equipment are often ganged together in several strings of batteries in order to provide the desired voltage (batteries arranged in series), as well as to increase the capacity, ampere-hours, of the battery back up (batteries arranged in parallel). For example, in a typical telecommunications equipment arrangement, batteries are arranged in 12 volt units connected in strings of four units each to provide a 48 volt open circuit voltage (such batteries typically have a charging voltage of 53 volts). Several battery strings are usually arranged in parallel to increase the battery capacity, and thereby lengthen the time that power can be supplied to the equipment by the batteries absent power from the DC system power supplies.

It is known that batteries deteriorate in their performance over time. Age is one factor; old batteries have more difficulty maintaining a full charge than new batteries do. Another reason for deterioration of battery performance is the build-up of crystalline deposits on battery plates. This is an electrochemical process which can be reversed by raising the voltage across the plates to deliver higher current through the plates so that the crystalline structures dissolve over time.

Plates in such batteries are often constructed having a contoured, or dimpled, face in order to increase surface area of the plates. This increased surface area increases capacity of the battery for a given volume. However, the crystalline deposits reduce the surface area of the plates involved in the battery function, and thereby reduce the effective voltage per plate. Thus the voltage produced by a battery with crystalline build up is less than a battery without such a build up. Elevating the voltage across the battery plates to an equalizing voltage above the charging reduces the crystalline build up, but the equipment served by the batteries is usually not designed to accommodate voltages much, if any, in excess of the rated charging voltage. At an elevated voltage (an equalizing voltage) above the charging voltage of the batteries, the dissolution of the crystalline build up on the battery plates may be accomplished in twelve to twenty-four hours. If a lesser voltage is used, the dissolution takes longer, perhaps much longer. The equalization process could conceivably be carried out at or below the charging voltage, but the time involved would be far in excess of the time the process takes at an elevated equalizing voltage, perhaps a week or weeks. It is desirable to remove the batteries from the power supply circuit associated with equipment being supplied because the equipment is often not rated for the elevated voltage employed to effect equalization. Because the removal of a battery from a power supply circuit means that the equipment served by that power supply circuit has less reserve operating time (i.e., time on battery power) in the event of a failure of the DC system power supplies, equalization is best accomplished quickly.

Equalization is carried out to get all cells in a battery back to the rated voltage per cell; i.e., to get all of the cells equal in their voltage capacity. Hence, the term "equalization". Because the equipment cannot take the elevated equalizing voltage involved in the process, the batteries are taken off line to undergo equalization. A system may have several strings of batteries. In such circumstances, the strings are equalized one at a time. Each string is in turn disconnected from the equipment and then connected to an equalizer charger. Hence, the term "off line equalization".

One approach to producing voltage for equalization of batteries is to provide the equalizing voltage (a voltage higher than the system charging voltage) from a DC system power supply. This configuration required that the DC system power supply be robust enough (i.e., rated for) to deliver an equalizing voltage higher than the system charging voltage. It would be desirable if one were only required to employ circuit components in equalizing voltage supply circuits which only needed to be rated to deliver a voltage lower than the equalizing voltage.

Another approach to providing equalizing voltage avoids the need for high-rated converters. The other approach takes the charging voltage provided by a DC system power supply and merely adds the voltage differential needed to provide the equalizing voltage; the added differential voltage is provided by a DC — DC converter. For example, in the exemplary telecommunications system mentioned earlier, the DC system power supplies provide a system charging voltage of 53 volts. In such a system, a DC — DC converter employed for equalization only needs to produce a differential voltage of 14 volts in order to achieve an equalizing voltage of 67 volts. In producing the required equalizing voltage, the DC — DC converter needs only to be rated to handle the differential voltage required to produce the equalizing voltage; it is not necessary to construct a converter rated to handle the entire equalizing voltage.

Such improved circuit topologies do not address a significant and dangerous problem encountered in applying equalization circuits to batteries. The battery being the load for the equalization circuit, the provision of the charging voltage by a DC system power supply, and the use of DC — DC converters to produce the differential voltage required to present the equalizing voltage, inherently bring a dangerous vulnerability into play. When a battery is connected as a load in such a circuit, the battery fixes the output of the equalization circuit at the voltage level of the battery. This is not a problem so long as the battery (load) voltage is substantially equal to or greater than the charging voltage. A problem arises when the battery-load voltage is below the charging voltage. In such circumstances there is a danger that the DC — DC converter employed to produce the differential voltage needed to generate the equalizing voltage will be back biased. It is commonly known that the limit for back biasing DC — DC converters is quite low, typically on the order of 0.5 volts. If that back bias limit is exceeded, a DC — DC converter runs a risk of experiencing catastrophic failure.

It is not at all uncommon for batteries to be less than fully charged when connected to equalizers. For example, if an operator disconnects a battery string in preparation for connection to an equalizer but delays the connection, then the battery could discharge in the interval. The battery could fall below the equalizing voltage in a matter of minutes. It could fall below its charging voltage in a matter of hours. The problem is even worse if the battery is not fully charged when disconnected.

One way to protect the converter from back bias is to ensure that the battery is connected in the equalizer circuit only when the battery voltage is greater than the charging voltage. This solution, however, only prevents equalization. It provides no way to prevent further voltage decay by the battery, and it provides no way to recharge the battery to the charging voltage so that equalization may be commenced.

There is a need for an equalizer apparatus that is capable of recognizing when a risk of back bias to a DC — DC converter exists and protects itself from damage from such a condition while still progressing in the equalization process.

## SUMMARY OF THE INVENTION

An apparatus for battery equalization includes a power supply unit; an electrical parameter measuring unit, a switching unit, and a control unit. The power supply unit delivers an equalizing signal to the switching unit which is connected intermediate the power supply unit and the battery to control delivery of the equalizing signal to the battery. The switching unit is configured to operate in a plurality of states. The switching unit delivers the equalizing signal to the battery at a first signal level when the switching unit is in a first state, and delivers the equalizing signal to the battery at a second signal level when the switching unit is in a second state. The electrical parameter measuring unit is connected to measure an electrical parameter associated with the battery. The control unit is connected with the electrical parameter measuring unit and with the switching unit. The control unit controls the state of the switching unit according to the value of the electrical parameter. A method for effecting battery equalization comprises the steps of connecting the battery with the equalizing apparatus with the switching unit configured to operate in the first state; the switching unit is arranged to present a high impedance path in the first state, and to present a low impedance path in the second state. The control unit is operated to change the state of the switching unit to the second state when the electrical parameter is at a predetermined value.

It is, therefore, an object of the present invention to provide an apparatus for battery equalization that is capable of recognizing when a risk of back bias exists.

It is a further object of the present invention to provide an apparatus for battery equalization that protects itself from damage from back bias conditions while still progressing in the equalization process.

It is yet a further object of the present invention to provide a method for effecting battery equalization that protects apparatus employed in effecting the method from damage from back bias conditions while still progressing in the equalization process.

Further objects and features of the present invention will be apparent from the following specification and claims when considered in connection with the accompanying drawings, in which like elements are labeled using like reference numerals in the various figures, illustrating the preferred embodiments of the invention.

## BRIEF DESCRIPTION OF THE DRAWINGS

FIG. 1 is a schematic diagram of the system environment in which the present invention is preferably employed.

FIG. 2 is a schematic diagram of an apparatus for delivering an equalizing signal.

FIG. 3 is a schematic diagram of another apparatus for delivering an equalizing signal.

FIG. 4 is a simplified schematic diagram of an equalizing system.

FIG. 5 is a simplified schematic diagram of an alternate equalizing system.

FIG. 6 is a simplified schematic diagram of the preferred embodiment of the present invention.

## DETAILED DESCRIPTION OF THE PREFERRED EMBODIMENT

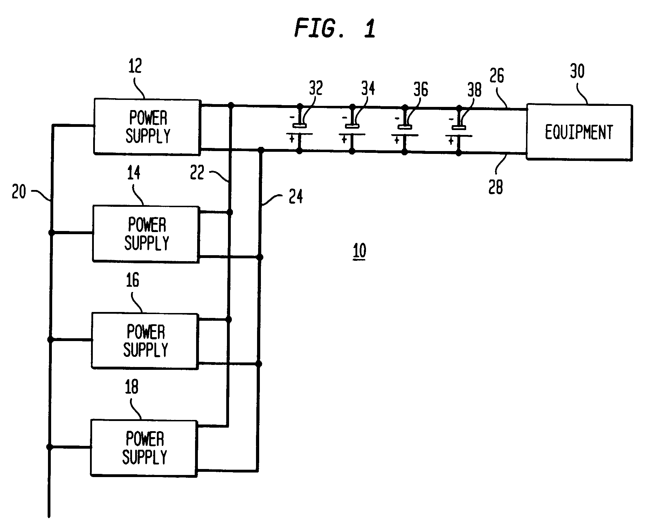

FIG. 1 is a schematic diagram of the system environment in which the present invention is preferably employed. In Fig. 1, an electrical system 10, such as, by way of example, a telecommunications system, is supplied with direct current (DC) supply voltage from a plurality of DC system power supplies 12, 14, 16, 18. DC system power supplies 12, 14, 16, 18 are powered by a common alternating current (AC) line 20 which is connected to a common controller (not shown in Fig. 1). DC system power supplies 12, 14, 16, 18 are connected in parallel via lines 22, 24 to DC supply lines 26, 28. DC supply lines 26, 28 are connected with system equipment 30 to provide DC system supply voltage to equipment 30.

A plurality of batteries 32, 34, 36, 38 are connected with DC supply lines 26, 28 in parallel with DC system power supplies 12, 14, 16, 18. Each of batteries 32, 34, 36, 38 may be a series-connected string of individual batteries, each of which individual batteries is made up of a plurality of series-connected cells. In a typical telecommunications system, for example, each battery 32, 34, 36, 38 has an open circuit voltage of 48 volts, and a charging voltage of 53 volts. In such an exemplary system, each battery 32, 34, 36, 38 is comprised of four twelve-volt batteries connected in series. System 10 may have several battery strings in order to increase the ampere-hour capacity of system 10 in case of failure of DC system power supplies 12, 14, 16, 18. That is, several battery strings may be connected in parallel in order to increase the reserve time of system 10 in the event of failure of DC system power supplies 12, 14, 16, 18. Such a failure could occur, for example, in the event of a failure of AC power on line 20.

Batteries of the type contemplated in connection with the preferred embodiment of the present invention include, for example, lead acid batteries. It is known that lead acid batteries deteriorate in their performance over time. Age is one factor; old batteries have more difficulty maintaining a full charge than new batteries do. Another reason for deterioration of battery performance is the build-up of crystalline deposits on battery plates. This is an electrochemical process which can be reversed by raising the voltage to an equalizing voltage across the plates to deliver higher current through the plates so that the crystalline structures dissolve over time. Equalization is carried out to get all cells in a battery back to the rated voltage per cell; i.e., to get all of the cells equal in their voltage capacity. Hence, the term "equalization". Because the system equipment cannot take the elevated equalizing voltage involved in the process, the batteries are taken off line to undergo equalization. Hence, the term "off line equalization".

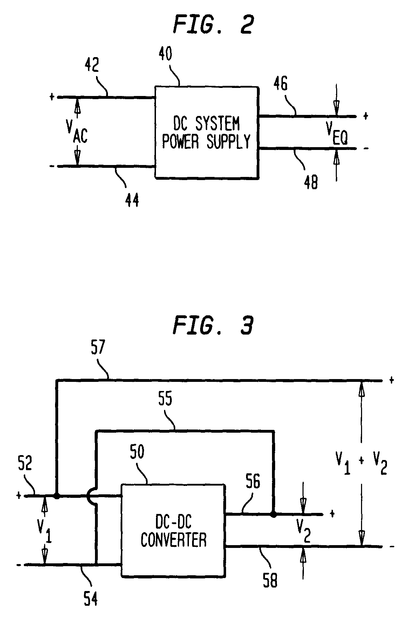

FIG. 2 is a schematic diagram of an apparatus for delivering an equalizing signal. In Fig. 2, a DC system power supply 40 receives an AC input voltage $V_{AC}$ via input lines 42, 44. AC input voltage $V_{AC}$ represents, for example, the AC voltage provided to DC system power supplies 12, 14, 16, 18 on line 20 in Fig. 1. DC system power supply 40 is preferably a DC system power supply (such as a DC system power supply 12, 14, 16, 18 in Fig. 1) configured to be capable of converting AC input voltage $V_{AC}$ to an output voltage $V_{EQ}$ and delivers output voltage $V_{EQ}$ at output lines 46, 48. Output voltage $V_{EQ}$ is the DC equalizing voltage required to equalize, for example, batteries in system 10 (Fig. 1). In the exemplary telecommunications system discussed in connection with Fig. 1, the equalizing voltage would be preferably in the range of 67 - 68 volts. For purposes of illustration, assuming that the rated current capacity of DC system power supply 40 configured for equalization is 100 amps (a common level of current rating in telecommunications applications, for example), DC system power supply 40 must be rated to handle 6700 watts (67 volts X 100 amps) in order to deliver the desired equalizing voltage.

FIG. 3 is a schematic diagram of another apparatus for delivering an equalizing signal. In Fig. 3, a DC — DC converter 50 receives a DC input voltage $V_1$ via input lines 52, 54. DC input voltage $V_1$ represents the DC system charging voltage provided to equipment 30 on DC supply lines 26, 28 in Fig. 1. Thus, in the exemplary telecommunications system discussed in connection with Fig. 1, $V_1$ is a DC voltage having a value of 53 volts. DC — DC converter 50 generates an output voltage $V_2$ and delivers output voltage $V_2$ at output lines 56, 58. In contrast with the converting configuration illustrated in Fig. 2, the output of DC — DC converter 50 is only $V_2$, which is the differential voltage between system input voltage $V_1$ (53 volts charging voltage in the telecommunications system example) and the required equalizing voltage ($V_1 + V_2$), a value of 67 volts in the telecommunications system example. In the converting circuit of Fig. 3, equalizing voltage ($V_1 + V_2$) is available at output lines 57, 58. This result is created by providing a jumper line 55 from input line 54 to output line 56, thus creating an additive result yielding output voltage ($V_1 + V_2$) at output lines 57, 58. The significance of this arrangement is that DC — DC converter 50 does not need to be rated to deliver the entire magnitude of output voltage ($V_1 + V_2$). DC — DC converter 50 only handles 1400 watts (14 volts X 100 amps). Only the differential voltage between input voltage $V_1$ and output voltage ($V_1 + V_2$) is managed by DC - DC converter 50: differential voltage V2.

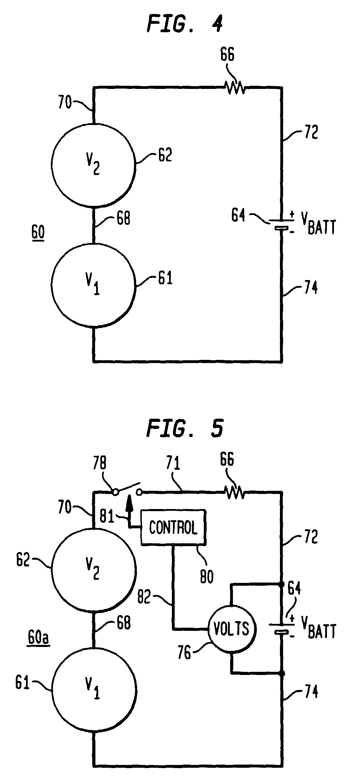

FIG. 4 is a simplified schematic diagram of an equalizing system. In Fig. 4, an equalizing system 60 includes a first voltage source 61 and a second voltage source 62. First voltage source 61 delivers a first voltage $V_1$, and second voltage source 62 delivers a second voltage $V_2$. Voltage sources 61,62 are connected via lines 68, 70, 72, and 74 to comprise an equalization circuit to deliver a combined voltage ($V_1 + V_2$) to a bat-

tery 64. Battery 64 has a charge in the amount of $V_{Batt}$ volts. An impedance 66 is indicated in lines 70, 72 to indicate at least the inherent impedance present in any circuit. Impedance 66 preferably has a low value. In operation, voltage sources 61, 62 deliver an equalizing voltage in the amount of combined voltage ($V_1 + V_2$) to battery 64. Voltage $V_1$ preferably represents the system DC system charging voltage provided by AC powered DC system power supplies in the system employing equalizing circuit 60 (the system is not shown in Fig. 4, but is representatively illustrated and discussed in connection with Fig. 1). Second voltage source 62 preferably is a DC — DC converter, such as DC — DC converter 50 in Fig. 3. Preferably, second voltage source 62 is connected with first voltage source 61 in a manner similar to the configuration illustrated and discussed in connection with Fig. 3.

A problem with equalizing system 60 is that its load is battery 64. Battery 64 maintains the voltage at line 70 equal to its charge voltage $V_{Batt}$. If battery 64 voltage $V_{Batt}$ is less than voltage $V_1$, then second voltage source 62 will be back biased. DC — DC converters are very sensitive to back biasing and generally cannot withstand back bias potentials. A typical back bias limit for DC — DC converters is on the order of about 0.5 volts. Exceeding the back bias limit of a DC — DC converter causes catastrophic failure of the converter. As discussed earlier, a battery voltage $V_{Batt}$ less than the system DC system charging voltage $V_1$ is not an uncommon occurrence.

FIG. 5 is a simplified schematic diagram of an alternate equalizing system. In Fig. 5, an equalizing system 60a includes voltage sources 61, 62. Voltage sources 61, 62 deliver voltages $V_1$ and $V_2$ to battery 64 in a circuit including lines 68, 70, 71, 72, 74 and impedance 66. Equalizing system 60a also includes a voltage measuring device 76, a switch 78, and a switch control unit 80. Voltage measuring device 76 is connected with switch control unit 80 via a line 82. Voltage measuring device 76 monitors voltage $V_{Batt}$ of battery 64. Voltage measuring device 76 and switch control unit 80 cooperate to control switch 78, as indicated by arrow 81, to ensure that switch 78 is open whenever voltage $V_{Batt}$ is at a level which would subject voltage source 62 to back bias. That is, if voltage source 62 has a back bias limit of $V_{bias}$ (i.e., there can be no more than $V_{bias}$ volts in back bias across voltage source 62), then switch 78 remains open so long as $V_{Batt}$ is greater than or equal to ($V_1 - V_{bias}$). That is a theoretical limit. In practice, a safety margin would likely be employed to ensure that there would be no chance of back bias occurring across voltage source 62.

A shortcoming of equalizing system 60a is that it will not accomplish anything so long as $V_{Batt}$ is below an acceptable threshold. Thus, if $V_{Batt}$ is too low, nothing occurs, and $V_{Batt}$ could further deteriorate. Voltage source 62 is protected against a back bias situation, but that is conceivably all that equalizing system 60a may accomplish.

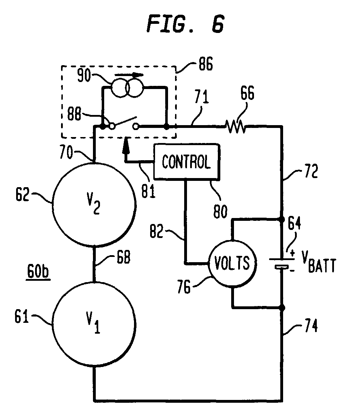

FIG. 6 is a simplified schematic diagram of the preferred embodiment of the present invention. In Fig. 6, an equalizing system 60b includes voltage sources 61, 62. Voltage sources 61, 62 deliver voltages $V_1$ and $V_2$ to battery 64 in a circuit including lines 68, 70, 71, 72, 74 and impedance 66. Equalizing system 60b also includes a voltage measuring device 76, a switching unit 86, and a switch control unit 80. Switching unit 86 includes a switch 88 and a limited current unit 90. Voltage measuring device 76 is connected with switch control unit 80 via a line 82. Voltage measuring device 76 monitors voltage $V_{Batt}$ of battery 64. Voltage measuring device 76 and switch control unit 80 cooperate to ensure that switching unit 86 opens switch 88 whenever voltage $V_{Batt}$ is at a level which would subject voltage source 62 to back bias. In such a condition, with switch 88 open, voltage sources 61, 62 provide output voltage (V1 + V2) via line 70 to switching unit 86. Since switch 88 is open, there is a limited current flow passed by limited-variance current unit 90 (such as a constant current source) through lines 71, 72 and impedance 66 to battery 64. Preferably, the current provided from limited-variance current unit 90 is on the order of 2 amps. Thus, with switching unit 86 in a first state, with switch 88 open, there is a trickle charge current provided to battery 64. Limited-variance current unit 90 inherently exhibits high impedance, since impedance is defined as

$$Z = \frac{\Delta V}{\Delta I} \, .$$

Because limited-variance current unit 90 (such as a constant current device) produces very little $\Delta I$ (nothing is perfect, so it will not be zero), the value for Z must be high. Any back bias caused by a low value of voltage across battery 64, that is a low value of $V_{Batt}$, will not back bias voltage source 62 unduly because of the high impedance of limited-variance current unit 90. A voltage divider effect is created, and the very high impedance across limited-variance current unit 90, compared with the relatively low impedance of voltage source 62, inherently ensures that the bulk of any back bias will occur across limited-variance current unit 90. In the mean time, the trickle charge current being applied to battery 64 from limited-variance current unit 90 will eventually raise $V_{Batt}$ to a level sufficient to obviate any back bias risk for voltage source 62. That event will be monitored by voltage measuring device 76. When $V_{Batt}$ rises to an acceptable value, voltage measuring device 76 and switch control unit 80 cooperate to cause switch 88 to close. With switch 88 closed, limited-variance current unit 90 is effectively bypassed because of the much lower impedance in a circuit path established through switch 88. Now the full equalizing voltage (V1 + V2) is applied to battery 64 without risk of back bias across voltage source 62.

It is to be understood that, while the detailed drawings and specific examples given describe preferred embodiments of the invention, they are for the purpose of illustration only, that the apparatus and method of the invention are not limited to the precise details and conditions disclosed and that various changes may be made therein without departing from the spirit of the invention which is defined by the following claims:

## Claims

1. An apparatus for battery equalization comprising: a power supply unit; an electrical parameter measuring unit; a switching unit; and a control unit; said power supply unit delivering an equalizing signal; said switching unit being connected intermediate said power supply unit and said battery to control delivery of said equalizing signal to said battery, said switching unit being configured to operate in a plurality of states, said switching unit delivering said equalizing signal to said battery at a first signal level when said switching unit is in a first state, said switching unit delivering said equalizing signal to said battery at a second signal level when said switching unit is in a second state; said electrical parameter measuring unit being connected to measure an electrical parameter associated with said battery; said control unit being connected with said electrical parameter measuring unit and with said switching unit, said control unit controlling said state of said switching unit according to the value of said electrical parameter.

2. An apparatus for battery equalization as recited in Claim 1 wherein said switching unit includes an electrical switching device and a signal limiting device, said switching unit responding to said control unit to orient said switching device in said first state to establish a high impedance path including said signal limiting device; said high impedance path connecting said power supply unit and said battery, said switching unit responding to said control unit to orient said switching device in said second state to establish a low impedance path; said low impedance path connecting said power supply unit and said battery.

3. An apparatus for battery equalization as recited in Claim 1 wherein said signal limiting device has a sufficiently high impedance to protect said power supply unit from back bias effects.

4. An apparatus for battery equalization as recited in Claim 2 wherein said signal limiting device has a sufficiently high impedance to protect said power supply unit from back bias effects.

5. An apparatus for battery equalization in a system having at least one system power supply unit to deliver a system voltage to equipment; the apparatus comprising: an equalizing power supply unit; an electrical parameter measuring unit; a switching unit; and a control unit; said equalizing power supply unit being connected with said at least one system power supply unit to deliver an equalizing signal; said switching unit being connected with at least one of said at least one system power supply unit and said equalizing power supply unit to control signal delivery to said battery; said switching unit being configured to operate in a plurality of states, said switching unit delivering said equalizing signal to said battery at a first signal level when said switching unit is in a first state, said switching unit delivering said equalizing signal to said battery at a second signal level when said switching unit is in a second state; said electrical parameter measuring unit being connected to measure an electrical parameter associated with said battery; said control unit being connected with said electrical parameter measuring unit and with said switching unit, said control unit controlling said state of said switching unit according to the value of said electrical parameter.

6. An apparatus for battery equalization as recited in Claim 5 wherein said switching unit includes an electrical switching device and a signal limiting device, said switching unit responding to said control unit to orient said switching device in said first state to establish a high impedance path including said signal limiting device; said high impedance path connecting said power supply unit and said battery, said switching unit responding to said control unit to orient said switching device in said second state to establish a low impedance path said low impedance path connecting said power supply unit and said battery.

7. An apparatus for battery equalization as recited in Claim 6 wherein said signal limiting device has a sufficiently high impedance to protect said power supply unit from back bias effects.

8. A method for effecting battery equalization comprising the steps of:

    (a) providing an equalizing power supply unit for delivering an equalizing signal;

    (b) providing a switching unit connected with said equalizing power supply unit, said switching unit being configured to operate in a plurality of states, said switching unit delivering said equalizing signal at a first signal level when said switching unit is in a first state, said switching unit delivering said equalizing signal at a second signal level when said switching unit is in a second state;

(c) configuring said switching unit to operate in said first state;

(d) connecting said battery with said switching unit;

(e) connecting an electrical parameter measuring unit to measure an electrical parameter associated with said battery;

(f) providing a control unit connected with said electrical parameter measuring unit and with said switching unit; said control unit controlling said state of said switching unit according to the value of said electrical parameter;

(g) operating said control unit to change said state of said switching unit to said second state when said electrical parameter is at a predetermined value.

9. A method for effecting battery equalization as recited in Claim 8 wherein said switching unit establishes a high impedance path intermediate said equalizing power supply unit and said battery in said first state, and wherein said switching unit establishes a low impedance path intermediate said equalizing power supply unit and said battery in said second state.

10. A method for effecting battery equalization as recited in Claim 9 wherein said switching unit in said first state has a sufficiently high impedance to protect said power supply unit from back bias effects.

# FIG. 1

## FIG. 2

42    40                          46

+ ─────────┐  ┌──────────────┐  ┌───────  +

$V_{AC}$      │ DC SYSTEM    │       $V_{EQ}$
         │ POWER SUPPLY │

- ─────────┘  └──────────────┘  └───────  -

44                               48

## FIG. 3

57

+

55

52        50                      56

+                                         +

$V_1$      │ DC-DC        │       $V_2$        $V_1 + V_2$

-          │ CONVERTER    │                     -

54                      58

## FIG. 4

## FIG. 5

# FIG. 6